Europäisches Patentamt

European Patent Office

Office européen des brevets

(19)

(11) Numéro de publication : **0 247 957 B1**

# (12) FASCICULE DE BREVET EUROPEEN

(45) Date de publication du fascicule du brevet :
30.10.91 Bulletin 91/44

(51) Int. Cl.⁵ : **F24C 15/32**, F24C 7/00

(21) Numéro de dépôt : **87430017.1**

(22) Date de dépôt : **07.05.87**

(54) **Dispositif d'unité de cuisson à énergies thermiques multiples utilisable comme réfrigérateur avec éléments auto-nettoyeurs incorporés.**

(30) Priorité : **16.05.86 FR 8607156**

(43) Date de publication de la demande :
**02.12.87 Bulletin 87/49**

(45) Mention de la délivrance du brevet :
**30.10.91 Bulletin 91/44**

(84) Etats contractants désignés :
**AT DE ES GB IT**

(56) Documents cités :
**EP-A- 0 143 066**
**WO-A-84/01424**
**DE-A- 2 842 771**
**DE-A- 2 851 918**
**FR-A- 2 407 444**

(73) Titulaire : **Grandi, René**
**Quartier Loudon -Ruy**
**F-38300 Bourgoin Jallieu (FR)**

(72) Inventeur : **Grandi, René**
**Quartier Loudon -Ruy**
**F-38300 Bourgoin Jallieu (FR)**

(74) Mandataire : **Roman, Michel**
**CABINET ROMAN 35, rue Paradis**
**F-13001 Marseille (FR)**

## Description

L'objet de l'invention concerne un dispositif d'unité de cuisson à énergies thermiques multiples utilisable comme réfrigérateur avec éléments auto-nettoyeurs incorporés.

Il est destiné à permettre non seulement l'utilisation pour la cuisson des aliments l'air chaud ou la vapeur, les grils directs, ces moyens pouvant être combinés ou employés isolément, mais encore la réfrigération des plats près à la consommation par réfrigération rapide avec nettoiement automatique en fin d'opérations.

Il est connu d'utiliser une unité de cuisson avec vaporisation, air pulsé ou autres, mais les éléments chauffants étaient logés dans la capacité contenant les aliments, ce qui rendait difficile le nettoyage sans démonter les générateurs d'énergie ou leurs distributeurs, il n'était également pas possible après la cuisson de conserver les aliments dans l'appareil à cause de la phase microbienne occasionnée par le lent refroidissement, enfin les moyens de positionnement des aliments traités ne pouvaient pas être employés pour le nettoiement incorporé. Le document DE-A-28 42771 décrit un dispositif d'unité de cuisson avec éléments auto-nettoyants qui comprend une cuve de cuisson communiquant par des ouvertures avec une chambre contenant le moyens de chauffage et de ventilation.

Le dispositif suivant l'invention supprime les inconvénients sus-mentionnés et permet d'abord de protéger les éléments générateurs d'énergie thermique et répartiteur lors du nettoiement de la cuve, ensuite de réaliser une réfrigération rapide pour la conservation des plats consommables en évitant la phase de génération microbienne et ensuite un auto-nettoiement par utilisation des moyens rotatifs porteurs d'aliments.

Il est constitué par la combinaison des caractéristiques de la revendication 1, notamment d'une capacité de cuisson séparée d'un ensemble juxtaposé contenant les générateurs thermiques multiples et les répartiteurs, ensuite par l'incorporation d'un dispositif réfrigérateur rapide et enfin par l'utilisation des moyens d'entraînement du porte aliment fonctionnel comme porte mannequin nettoyeur de la cuve de cuisson séparée de l'appareillage.

Sur les dessins annexés, donnés à titre d'exemple non limitatif, d'une des formes de realisation de l'objet de l'invention :

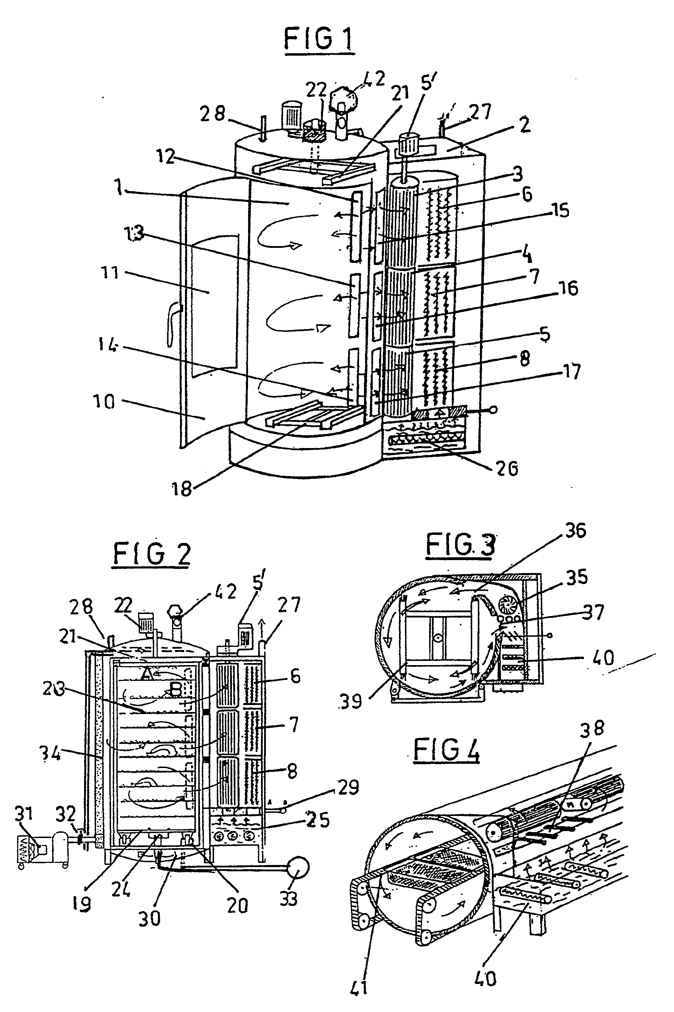

La figure 1 représente vu en élévation et en coupe longitudinale l'unité de cuisson dans son ensemble ; la figure 2 montre dans les mêmes conditions mais à une échelle réduite la cuve avec le porte aliment rotatif ; les figures 3 et 4 représentent des variantes d'exécution avec cuve horizontale.

Le dispositif suivant les figures 1 et 2 comporte une cuve ou capacité de cuisson 1 et une armoire 2 juxtaposée.

Dans cette armoire sont déposées sur toute sa hauteur des turbines tangentielles 3, 4, 5 entraînées par le moteur 5' propulsant l'air chauffé par les résistances 6, 7, 8.

Sur une partie de la périphérie de la cuve circulaire 1 est placée une porte 10 avec vitrage de contrôle 11.

Les turbines propulsent l'air dans la cuve par les orifices d'admission 12, 13, 14.

Cet air chaud est recyclé pour son réchauffage par les orifices d'évacuation 15, 16, 17.

A la partie inférieure de la cuve est placé le chassis 18 recevant le chariot tournant 19 (fig 2).

Ce chariot est cylindrique comme la cuve 1 ou carré et est monté sur éléments de rotation 20 et autres.

La partie supérieure de la cuve est pourvue d'un chassis 21 entraîné par le moteur 22 qui le fait tourner dans le sens inverse de celui de l'air thermique, flèche A et B.

Cette turbulence inversée assure une répartition de la chaleur sur les aliments à cuire.

Ce chariot porteur d'aliments est équipé de résistances 23 et autres sur clayettes pour la réalisation de grillades directes .

Un coffret de connexions électriques 24 est disposé à la partie inférieure.

Cet ensemble chariot rotatif, résistances, permet par exemple de rôtir un poulet et de le dorer avec de l'air chaud ou de la vapeur émise en même temps.

A la base de l'armoire 2 est placée une réserve d'eau 25 alimentée par un niveau constant à flotteurs.

Des fourreaux chauffants 26 sont immergés dans la masse d'eau et lorsque celle-ci est portée à ébullition la vapeur fluante est brassée par les turbines et propulsée par les orifices 15 et autres dans la cuve 1.

Lorsque les résistances 6, 7, 8 sont mises en circuit on obtient une vapeur surchauffée dépassant les cent degrés centigrades.

On dispose séparément ou en combinaison des énergies thermiques multiples telles :

1° De la vapeur fluante

2° De l'air chauffé sec et sans vapeur

3° Des grillades indépendantes

4° Une combinaison air, vapeur, gril

Des soupapes de sûreté 27, 28 équipent les cuve 1 et armoire 2, ce qui permet l'évacuation des surpressions pouvant se produire.

Une vanne 29 permet de diriger la vapeur, soit à l'intérieur de la cuve 1, soit à l'extérieur pour l'évacuation de l'air chaud lorsqu'on procède à la phase réfrigération.

Un cône de récupération 30 collecteur est disposé à la base avec orifice de vidange.

Pour permettre de protéger tous les éléments générateurs d'énergie thermique lors du nettoiement de la cuve, un compresseur de gaz 31 et une vanne anti-retour (32) sont situés en dehors de la cuve de cuisson; de plus un évaporateur est logé dans le cône supérieur 21 (vanne système POMODOVE).

Après avoir retiré le chariot 19 on introduit un mannequin dans la cuve qui se positionne sur les montures rotatives 18, 21. Ce mannequin de nettoyage comporte des brosses dures et souples pour le raclage des parois, une trappe vient fermer les orifices 12, 13, 14, 15, 16, 17.

A la base de ce mannequin est disposée une projection d'eau chaude 33 avec compresseur pour le lavage et le rinçage.

Ce four est prévu pour que les turbines et les organes moteurs ne soient jamais souillés par les graisses ou autres agents polluants. La vapeur elle-même n'étant jamais imprégnée de graisse ou autres impuretés.

La totalité des résidus est collectée et évacuée par le cône 30 pourvu d'une vidange.

Le mannequin une fois extrait de la cuve pourra lui-même être nettoyé par un jet de vapeur au moyen de la vanne 29

Enfin le réfrigérateur à détente directe avec gaz réfrigérant 31 peut être mis en action dès la fin de la cuisson. L'air chaud et la vapeur évacués par les turbines permettent un abaissement rapide de la température supprimant la phase microbienne qui se situe aux environs de 60°, 65° centigrades. La cuve passe de plus de 100° à 3 ou 4° en un temps extrêmement réduit.

L'évacuation de l'air chaud par le haut de la cuve de cuisson 1 au moyen de la soupape d'évacuation du gaz 42 située elle-même vers le haut de ladite cuve, accélère ce refroidissement déjà rapide par l'émission par l'évaporateur 21,des gaz réfrigérants alors que le clapet anti retour 32 se ferme.

Enfin la cuve 1 est isolée avec une garniture isotherme enveloppante 34.

L'unité de cuisson (fig 3, 4) peut suivant une - variante d'exécution être horizontale et être utilisée en four tunnel.

Les mêmes organes, turbines 35, orifices d'admission 36, d'évacuation 37, résistances 38, supports - de chariot 39, éléments de vaporisation 40 et autres, sont utilisables dans les mêmes conditions.

Il est toutefois possible de remplacer le chariot par des chaînes transporteuses 41.

Il est possible d'utiliser des programmations pour la marche automatisée de ces fours.

Il est en outre précisé qu'il est possible avec ce four de pratiquer la cuisson à chaleur lente c'est-à-dire utiliser le courant à prix réduit des heures creuses, c'est ainsi qu'un jambon peut être apprêté en sept ou huit heures, à une température située entre 72° et 75° centigrades, puis ensuite réfrigéré en attendant que l'on vienne le retirer pour le stockage.

De multiples possibilités d'utilisation sont ainsi rendues possibles partant d'un ensemble rationalisé et d'un fonctionnement simplifié.

Toutefois les formes, dimensions et dispositions des différents éléments pourront varier dans la limite des équivalents comme d'ailleurs les matières utilisées pour leur fabrication, sans changer pour cela, la conception générale de l'invention qui vient d'être décrite.

## Revendications

1. Dispositif d'unité de cuisson à énergies thermiques multiples comportant également des éléments réfrigérants et des éléments auto-nettoyants incorporés, destiné à permettre l'utilisation simultanée et combinée ou indépendante de l'air chaud, de la vapeur et de grils directs, avec refroidissement rapide accéléré par l'évacuation automatisée de l'air chaud supprimant les inconvénients du refroidissement lent des aliments, et en particulier la phase de génération microbienne qui se situe entre 60 et 65°C, avec éléments utilisables pour les ustensiles de cuisson et pour le nettoyement de la cuve de cuisson,

le dispositif comprenant une cuve de cuisson (1) cylindrique avec porte étanche (10) munie d'un vitrage de contrôle (11), dans laquelle des montures rotatives (18, 21) actionnées par un moteur (22) peuvent recevoir et entraîner en rotation un chariot (19) porte-aliments équipé de grils (23),

ensuite, une armoire (2) juxtaposée à la cuve de cuisson (1) mais séparée d'elle, contenant les appareillages mécaniques et générateurs thermiques, et en particulier des turbines tangentielles (3, 4, 5) des résistances chauffantes (6, 7, 8), une réserve d'eau (25) à la base avec des fourreaux chauffants (26), une soupape (29) dirigeant la vapeur soit à l'intérieur de l'armoire (2), soit à l'extérieur, ladite armoire communiquant avec la cuve de cuisson (1) par des orifices d'admission (12, 13, 14) et des orifices d'évacuation (15, 16, 17) disposés de telle sorte que le flux de gaz chaud soufflé par les turbines (3, 4, 5) tourne dans la cuve de cuisson dans le sens inverse de celui du chariot (19) porte-aliments, lesdits orifices d'admission et d'évacuation pouvant être obturés par une trappe de fermeture permettant une isolation pour les périodes de refroidissement et une protection des éléments générateurs d'énergie thermique lors du nettoyage de la cuve de cuisson,

enfin un ensemble réfrigérant composé d'un évaporateur situé dans la cuve de cuisson (1), d'un compresseur de gaz (31) et d'une vanne anti-retour (32) situés en dehors de ladite cuve de cuisson, cet ensemble étant complété par une soupape d'évacuation de gaz chaud (42) en partie haute de la cuve de cuisson.

2. Dispositif suivant la revendication 1, se caractérisant par le fait que les montures rotatives (18, 21) peuvent recevoir et entraîner en rotation, grâce au moteur (22), un mannequin de nettoyage en lieu et place du chariot (19) porte-aliments, ce mannequin comportant des brosses dures et souples pour le raclage des parois de la cuve de cuisson (1), le fond de cette dernière étant équipé d'un diffuseur d'eau chaude sous pression, et formant un cône collecteur (30) de l'eau sale, avec canalisation d'évacuation.

3. Dispositif suivant la revendication 1, se caractérisant par le fait que la cuve de cuisson est disposée horizontalement et utilisée en four tunnel, avec les mêmes éléments de diffusion et de chauffage (35, 36, 37, 38, 39, 40).

4. Dispositif suivant la revendication 3, se caractérisant par le fait que le chariot (19) porte-aliments est remplacé par un transporteur horizontal passant à l'intérieur de la cuve de cuisson (1).


**Patentansprüche**

1. Einrichtung zum Garen und Kochen mit verschiedenen thermischen Energien, ebenfalls versehen mit eingebauten Kühlelementen und selbstreinigenden Elementen, dazu bestimmt die gleichzeitige, kombinierte oder getrennte Nutzung von Heißluft, Dampf und direkten Grills zu ermöglichen, mit rascher durch den automatisierten Abzug von Luft beschleunigten Kühlung und damit Unterbindung der Nachteile einer langsamen Abkühlung der Nahrungsmittel und insbesondere die zwischen 60 und 65°C liegende Phase der Mikrobenentwicklung, mit für die Kochutensilien und für die Reinigung des Kochkessels verwendbaren Elementen;

diese Einrichtung setzt sich zusammen aus einem zylindrischen Kochkessel (1) mit einer dichtschließenden mit einem Sichtfenster (11) versehenen Tür (10), in dem durch einen Motor (22) betätigte, drehbare Rahmen (18, 21) einen die Nahrungsmittel enthaltenden und mit Grillelementen (23) ausgerüsteten Wagen (19) aufnehmen und in Drehung versetzen können,

ferner aus einem dem Kochkessel (1) angegliederten, jedoch von diesem getrennten Schrank (2) mit den mechanischen Geräten und Wärmegeneratoren, insbesondere den Tangentialturbinen (3, 4, 5), den Heizwiderstände (6, 7, 8), einer Wasserreserve (25) im unteren Teil mit Heizelementen (26), einem Ventil (29), das den Dampf entweder ins Innere des Schrankes (2) oder nach Außen steuert wobei der erwähnte Schrank mit dem Kochkessel (1) durch Eintrittsöffnungen (12, 13, 14) und Austrittsöffnungen (15, 16, 17) verbunden ist, welche so angeordnet sind, daß der von den Turbinen (3, 4, 5) erzeugte Heißluftstrom in der Richtung entgegengesetzt zur Drehrichtung des Nahrungsmittel-Wagens (19) fließt, wobei die besagten Eintritts- und Austrittsöffnungen durch eine Verschlußklappe geschlossen werden können und damit eine Trennung für die Kühlphasen und ein Schutz der Wärmeerzeugungselemente während der Reinigung des Kochkessels gewährleistet wird,

und schließlich aus einer Kühleinheit, bestehend aus einem in dem Kessel (1) befindlichen Verdampfer, einem Gasverdichter (31) und einem Sperrschieber (32) außerhalb des erwähnten Kochkessels und, zur Vervollständigung der Einheit, einem Heißluft-Abblaseventil (42) im oberen Teil des Kochkessels.

2. Vorrichtung nach Anspruch 1, dadurch gekennzeichnet, daß die Drehrahmen (18, 21) anstelle des NahrungsmittelWagens (19) eine Reinigungsvorrichtung aufnehmen und mit Hilfe des Motors (22) in Drehung versetzen können, welche Reinigungsvorrichtung mit harten und weichen Bürsten zum Schrubben der Wände des Kochkessels (1) versehen ist, wobei der Boden dieses Kessels mit einer Heißwasser-Druckdüse ausgerüstet ist und einen Auffangkegel mit Abflußleitung für das Schmutzwasser bildet.

3. Vorrichtung nach Anspruch 1, dadurch gekennzeichnet, daß der Kochkessel horizontal angeordnet ist und mit den gleichen Verteiler- und Heizelementen (35, 36, 37, 38, 39, 40) als Tunnelofen eingesetzt wird.

4. Vorrichtung nach Anspruch 3, dadurch gekennzeichnet, daß der Nahrungsmittel-Wagen (19) durch eine horizontale Fördereinrichtung ersetzt wird, die durch das Innere des Kochkessels (1) läuft.


**Claims**

1. Multiple thermal energy cooking unit comprising both incorporated self-cleaning elements and cooling elements for simultaneous and combined or separate use of hot air, steam and direct grills, with accelerated fast cooling by automated evacuation of hot air eliminating the disadvantages in slow cooling of foodstuffs and especially the phase of microbial multiplication which occurs between 60 and 65°C, including elements utilisable for cooking utensils and for oven cleaning,

the unit comprising a cylindrical cooking vessel (1) with leaktight door (10) fitted with observation window (11) in which rotary fittings (18, 21) with drive motor (22) receive and rotate a food trolley (19) fitted with grills (23),

and, a cabinet (2) adjoining the cooking vessel (1) but separate therefrom, containing the heat generators and mechanical equipment, and especially the tangential air turbines (3, 4, 5), heating resistances (6, 7, 8), water tank (25) at the base with the heating elements (26), a relief valve (29) directing the steam either inside the cabinet (2) or outside the said cabinet communicating with the cooking vessel (1) by inlets (12, 13, 14) and outlets (15, 16, 17) arranged so that the hot air flow blown by the turbine (3, 4, 5) flows around the cooking vessel in the opposite direction to the food trolley (19), the said intakes and outlets being pluggable by a closure flap for isolating the oven during cooling and to protect heat generator elements during cleaning the cooking vessel,

finally, a cooling element comprising an evaporator situated in the cooking vessel (1), a compressor (31) and a non-return valve (32) situated outside the said cooking vessel, this assembly being completed by a hot gas discharge valve (42) in the upper part of the cooking vessel.

2. Device as per claim 1 distinguished by the fact that the rotating assemblies (18, 21) can be fitted with a motor (22) providing rotational movement, a cleaning dummy which replaces the food trolley (19), this dummy being fitted with hard and flexible brushes for scrapping the cooking vessel walls (1), the bottom of the latter being fitted with a pressurized hot water spray and forming a salt water collecting cone (30) with discharge pipe.

3. Device as per claim 1 distinguished by the cooking vessel being arranged horizontally and used as a tunnel oven with the same elements for diffusion and heating (35, 36, 37, 38, 39, 40).

4. Device as per claim 3 distinguished by the food trolley (19) being replaced by a horizontal conveyor passing through the inside of the cooking vessel (1).

EP 0 247 957 B1

# FIG 1

# FIG 2

# FIG. 3

# FIG 4